# EUROPEAN PATENT SPECIFICATION

(11) **EP 0 580 257 B1**
(45) Date of publication and mention of the grant of the patent: **18.12.1996**
(21) Application number: 93202159.5
(22) Date of filing: 13.07.1993
(51) Int. Cl.: H05B 41/29, H05B 41/38

(54) **Circuit arrangement for square-wave modulation of a high-frequency current in a ballast for a discharge lamp**
Schaltungsanordnung zur Rechteckmodulation des hoch frequenten Stromes in einem Vorschaltgerät für eine Entladungslampe.
Dispositif de commutation pour la modulation en carré du courant haute-fréquence dans un ballast de lampe à décharge

(30) Priority: 20.07.1992 EP 92202206
(43) Date of publication of application: 26.01.1994
(73) Proprietor: Philips Electronics N.V., 5621 BA Eindhoven (NL)
(72) Inventor: Reijnaerts, Jozef Hubert, NL-5656 AA Eindhoven (NL)
(74) Representative: Evers, Johannes Hubertus Maria

(56) References cited:
- EP-A- 0 498 497
- IEEE IAS ANNUAL MEETING 12 October 1990, SEATTLE pages 1149 - 1156 LEE &AL. 'A UNITY POWER FACTOR HIGH FREQUENCY PARALLEL RESONANT ELECTRONIC BALLAST'

## Description

The invention relates to a circuit arrangement for operating a discharge lamp by means of a high-frequency current, comprising
- switching means for generating the high-frequency current from a supply voltage,
- a modulator for the substantially square-wave modulation of the amplitude of the high-frequency current with a modulation frequency f, and
- means M for limiting the interference with infrared systems caused by the discharge lamp.

Such a circuit arrangement is described in EP-A-0 498 497.

The circuit arrangement is suitable for operating discharge lamps, in particular low-pressure discharge lamps, more in particular electrodeless low-pressure discharge lamps.

During lamp operation by means of the circuit arrangement described therein, a substantially square-wave modulated high-frequency voltage is present across the discharge lamp, to be referred to as the lamp hereinafter. The frequency and phase of the substantially square-wave modulation of the high-frequency voltage across the lamp are the same as the frequency and phase of the substantially square-wave modulation of the high-frequency current. At the start of each square wave of the substantially square-wave modulated high-frequency voltage, the lamp is re-ignited by the high-frequency voltage which then acts as a re-ignition voltage. After this the amplitude of the high-frequency voltage drops to a substantially constant lamp-dependent value owing to the fact that the lamp becomes conducting, and the high-frequency voltage causes the high-frequency current to flow through the lamp during the square wave. In the remaining portion of each cycle of the substantially square-wave modulation of the high-frequency voltage, practically no voltage is present across the lamp and practically no current flows through the lamp. The lamp is dimmed in that a duty cycle δ of the substantially square-wave modulation of the high-frequency voltage is adjusted. It was found that the luminous efficacy is comparatively high and substantially independent of the luminous flux with this dimming method.

The means M in the circuit arrangement described in EP-A-0 498 497 comprise means for limiting the amplitude of the re-ignition voltage with which the discharge lamp is re-ignited at the start of each square wave. The circuit arrangement may also be provided with means for limiting the speed with which the amplitude of the high-frequency current drops at the end of each square wave of the square-wave modulation. These measures each produce a considerable reduction in the interference with infrared systems caused by the discharge lamp. A disadvantage of the known circuit arrangement, even if provided with the two measures indicated above, however, is that a lamp operated by means of this circuit arrangement still causes a certain amount of interference with infrared systems.

The invention has for its object inter *alia* to provide a circuit arrangement with which the degree of interference with infrared systems caused by a lamp operated on the circuit arrangement is reduced.

According to the invention, this object is achieved in that the means M of a circuit arrangement of the kind mentioned in the opening paragraph comprise means N for providing a gradual increase in the speed with which the amplitude of the high-frequency current decreases at the end of a square wave of the square-wave modulation.

During lamp operation utilizing the circuit arrangement described in EP-A-0 498 497 the speed with which the amplitude of the high-frequency current decreases at the end of each square wave changes abruptly from substantially zero to a comparatively high value. This abrupt change causes a sharp angle in the square-wave form between the substantially constant level corresponding to stationary lamp operation and the trailing edge of the square wave. The substantially square-wave modulation modulates both the luminous flux of the visible light radiated by the discharge lamp and the luminous flux of the infrared light radiated by the discharge lamp. Interference with infrared systems is caused by this substantially square-wave modulation of the infrared flux. The presence of a sharp angle in the square-wave causes a comparatively great intensity in the infrared light radiated by the lamp at comparatively high frequencies in the frequency spectrum of the power of the square-wave modulated infrared flux. Since infrared systems often use such comparatively high frequencies, the interference with infrared systems is caused to a considerable extent by the sharp angle in the square-wave form. The means N effect a rounding of the sharp angle in the square-wave form of both the substantially square-wave modulated high-frequency voltage and the substantially square-wave modulated high-frequency current. This rounding effect causes the intensity of the infrared light radiated by the lamp at comparatively high frequencies to decrease, whereby the interference with infrared systems decreases. It was found that the reduction in interference with infrared systems is greater in proportion as the speed with which the amplitude of the high-frequency current decreases at the end of each square wave rises more slowly.

In a circuit arrangement according to the invention comprising a converter provided with a switching element for generating a DC voltage from a supply voltage, from which DC voltage the high-frequency current is generated during lamp operation, the means N may be advantageously realised in the form of means which gradually increase the speed with which the duty cycle of the switching element decreases at the end of each square wave. This gradual increase in the speed with which the duty cycle of the switching element decreases causes a gradual increase in the speed with which the DC voltage decreases, and thus a corresponding gradual increase in the speed with which the amplitude of the high-frequency current decreases.

To realise a further suppression of interference with infrared systems, it is possible to provide the circuit arrangement with means for limiting the re-ignition voltage at the beginning of each square wave and/or means for limiting the speed with which the amplitude of the voltage across the lamp decreases at the end of each square wave. These two measures are described in EP-A-0 498 497. In a circuit arrangement comprising a converter provided with a switching element for generating from a supply voltage a DC voltage from which a high-frequency current is generated during lamp operation, these two measures may be implemented in a comparatively simple manner in that the circuit arrangement is provided with means for limiting the duty cycle at the beginning of each square wave and/or means for limiting the speed with which the duty cycle decreases at the end of each square wave.

Embodiments of the invention will be explained in more detail with reference to a drawing.

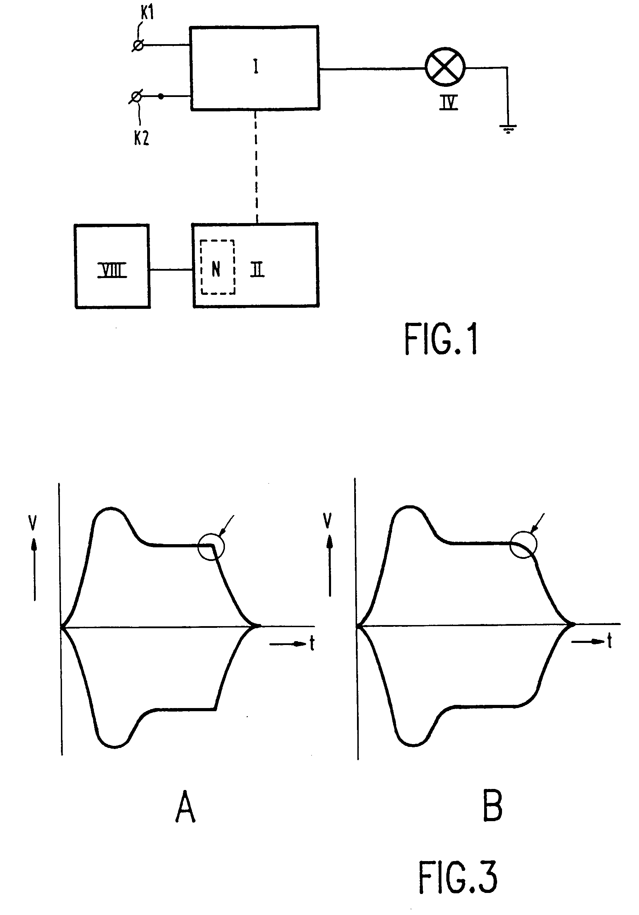

In the drawing, Fig. 1 is a block diagram of an embodiment of a circuit arrangement according to the invention;
Fig. 2 shows the embodiment of Fig. 1 in more detail, and
Fig. 3 shows a waveform of a square wave of a square-wave modulated high-frequency current generated by means of the embodiment of Fig. 2, and a waveform of a square wave of a square-wave modulated high-frequency current generated by means of a circuit arrangement as described in EP-A-0 498 497 and not provided with means for gradually increasing the speed with which the amplitude of the high-frequency current decreases at the end of each square wave.

In Fig. 1, K1 and K2 are input terminals suitable for connection to a supply voltage source. I are switching means for generating a high-frequency current from a supply voltage supplied by the supply voltage source. II is a modulator for the substantially square-wave modulation of an amplitude of the high-frequency current with a modulation frequency f. Modulator II is also provided with means N for gradually increasing the speed with which the amplitude of the high-frequency current decreases at the end of a square wave of the square-wave modulation. Modulator II is coupled to switching means I. An output of switching means I is coupled to a lamp IV. Modulator II is also coupled to switching means VIII for adjusting a duty cycle δ of the substantially square-wave modulated high-frequency current.

The operation of the circuit arrangement shown in Fig. 1 is as follows.

When the input terminals K1 and K2 are connected to a supply voltage source, the switching means I generate a high-frequency current which is modulated into a substantially square-wave form by the modulator II with a modulation frequency f. The means N achieve that the speed with which the amplitude of the high-frequency current decreases increases gradually at the end of each square wave. Thus the presence of a sharp angle in the square-wave form is avoided, and the interference with infrared systems caused by the lamp IV is comparatively small as a result.

The luminous flux of the lamp is adjustable through adjustment of the duty cycle δ of the substantially square-wave modulated high-frequency current by means of the switching means VIII.

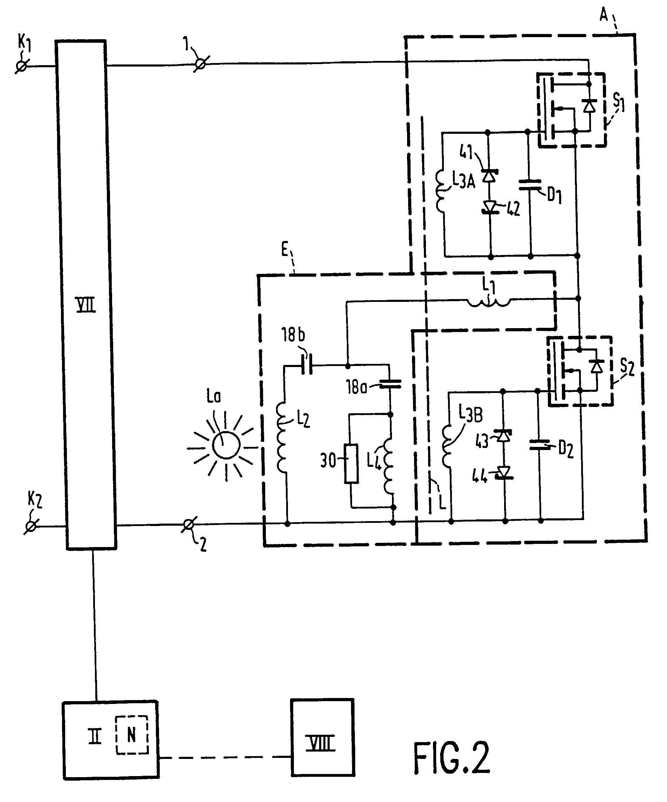

In the circuit arrangement shown in Fig. 2, circuit branches A and E together with input terminals 1 and 2 form an incomplete half bridge. K1 and K2 are input terminals suitable for connection to a supply voltage source and VII is a converter provided with a switching element for generating a DC voltage from a supply voltage. Together with the converter VII and the input terminals K1 and K2, the incomplete half bridge constitutes switching means for generating a high-frequency current from a supply voltage. La is an electrodeless lamp operated by these switching means. Modulator II is coupled to converter VII.

The incomplete half bridge is constructed as follows.

Branch A is formed by switching elements S1 and S2, secondary windings L3A and L3B of transformer L, zener diodes 41, 42, 43 and 44, and capacitors D1 and D2. Load branch E comprises coil L1 and the load circuit which is formed by coil L2, primary winding L4 of transformer L, capacitors 18a and 18b, and resistor 30. Switching elements LS1 and S2 each comprise a flywheel diode of which an anode is connected to a first main electrode of the relevant switching element and a cathode is connected to a second main electrode of the relevant switching element. Coil L2 is positioned inside a recess of a lamp vessel of an electrodeless lamp La. The second main electrode of the switching element S1 is connected to input terminal 1. An end of the secondary winding L3A is connected to a control electrode of the switching element S1 and a further end of the secondary winding L3A is connected to the first main electrode of the switching element S1. The capacitor D1 shunts the secondary winding L3A. The secondary winding L3A is also shunted by a series arrangement of two zener diodes 41 and 42 whose anodes are interconnected. The first main electrode of the switching element S1 is connected to the second main electrode of the switching element S2. An end of the secondary winding L3B is connected to a control electrode of the switching element S2 and a further end of the secondary winding L3B is connected to the first main electrode of the switching element S2. The capacitor D2 shunts the secondary winding L3B. The secondary winding L3B is also shunted by a series arrangement of two zener diodes 43 and 44 whose anodes are interconnected. The first main electrode of switching element S2 is connected to input terminal 2. A side of coil L1 is connected to a common junction point of switching elements S1 and S2. A further end of coil L1 is connected to a side of capacitor 18a and a side of capacitor 18b. A further side of capacitor 18b is connected to an end of coil L2. A further end of coil L2 is connected to input terminal 2. A further end of capacitor 18a is connected to primary winding L4. A further end of primay winding L4 is connected to input terminal 2. Resistor 30 shunts primary winding L4.

The operation of the circuit arrangement shown in Fig. 2 is as follows.

When the input terminals K1 and K2 are connected to the poles of a supply voltage source, a substantially square-wave voltage Vin with a duty cycle δ and a frequency f is present between the input terminals 1 and 2. The voltage Vin is substantially equal to zero during a portion of the cycle belonging to the frequency f. During this portion of each cycle the voltage across the lamp La is also substantially equal to zero. For the remaining portion of each cycle of Vin, the potential of input terminal 1 is higher than that of input terminal 2, and the switching elements S1 and S2 of the incomplete half bridge are rendered conducting and non-conducting with a high frequency ν. As a result of this, a high-frequency voltage with frequency ν is present across the lamp La. Thus a substantially square-wave modulated high-frequency voltage is present across the lamp La, the phase and the frequency of the substantially square-wave modulation corresponding to those of the substantially square-wave voltage Vin. The high-frequency voltage across the lamp serves as a re-ignition voltage at the beginning of each square wave of the substantially square-wave modulation. After re-ignition, a high-frequency current flows through the lamp for the remaining portion of each square wave.
Means N gradually increase the speed with which the amplitude of Vin decreases at the end of each square wave from substantially the value zero during a time interval which is a substantial portion of a cycle of the voltage Vin. As a result, the speed with which the amplitude of the high-frequency voltage across the lamp decreases, and thus also the speed with which the amplitude of the high-frequency current through the lamp decreases, increase gradually from substantially the value zero over a time interval which is a substantial portion of a cycle of the substantially square-wave modulation. This gradual increase in the speed with which the high-frequency current through the lamp decreases at the end of each square wave of the substantially square-wave modulation leads to a suppression of the interference with infrared systems.

When the supply voltage is an AC voltage, the converter VII may be constructed, for example, from a diode bridge and a combination of one or several DC-DC converters of types such as upconverters, downconverters, or flyback converters. It is possible to give Vin a substantially square-wave form with frequency f and to control the amplitude of Vin as a function of time by varying the duty cycle of the switching element(s) present in the DC-DC converter(s) periodically with the frequency f.

Fig. 3a shows the waveform of a square wave of the square-wave modulated voltage across a lamp operated on a circuit arrangement of the kind mentioned in the opening paragraph and not provided with means N. It is apparent that the speed with which the amplitude of the voltage decreases at the end of the square wave changes abruptly from substantially zero to a comparatively high value. As a result, the waveform shows a sharp angle between the trailing edge and the substantially constant level corresponding to stationary lamp operation. Fig. 3b shows the waveform of a square wave of the square-wave modulated voltage across a lamp operated on a circuit provided with means N. The means N achieve a gradual increase the speed with which the amplitude of the voltage across the lamp decreases, so that the square-wave form does not show a sharp angle.

With a practical embodiment of a circuit arrangement as shown in Fig. 2, the power of the infrared light was measured for an electrodeless low-pressure mercury discharge lamp whose (visible) luminous flux was 3500 lumens at a frequency of 36 kHz and a bandwidth of 4 kHz, during normal operation of the circuit arrangement while the means N were active and while the means N were rendered inactive. The frequency of the square-wave modulation was 500 Hz. Provisions were made in the circuit arrangement for limiting the re-ignition voltage, and the speed with which the amplitude of the high-frequency voltage across the low-pressure mercury discharge lamp decreases at the end of each square wave was limited to 1,1 V/µs. In the case in which the means N were inactive, the speed with which the amplitude of the high-frequency voltage decreased changed from substantially zero to approximately 1,1 V/µs at the end of each square wave in less than 1 µS. When the means N were switched on, the speed with which the amplitude of the high-frequency voltage decreases at the end of each square wave increased from substantially zero to approximately 1,1 V/µs over a time interval of approximately 50 µs. In either case the speed of the decrease in amplitude of the high-frequency voltage across the low-pressure mercury discharge lamp remained substantially constant after the value of 1,1 V/µs had been reached. It was found that the power of the infrared light radiated by the discharge lamp measured at a frequency of 36 kHz and a bandwidth of 4 kHz was lower by approximately a factor 3 with active means N compared with the situation with inactive means N. Since many infrared systems operate at a frequency of the order of 10 kHz, this strong decrease in the power of the infrared light in fact shows that the means N in this practical embodiment of a circuit arrangement according to the invention lead to a considerable reduction of the interference caused by the discharge lamp.

## Claims

1. A circuit arrangement for operating a discharge lamp (La) by means of a high-frequency current, comprising
- switching means for generating the high-frequency current from a supply voltage,
- a modulator (II) for the substantially square-wave modulation of the amplitude of the high-frequency current with a modulation frequency f, and
- means M for limiting the interference with infrared systems caused by the discharge lamp (La),
characterized in that the means M comprise means N for providing a gradual increase in the speed with which the amplitude of the high-frequency current decreases at the end of a square wave of the square-wave modulation.

2. A circuit arrangement as claimed in Claim 1, comprising a converter provided with a switching element for generating a DC voltage from the supply voltage, from which DC voltage the high-frequency current is generated during lamp operation, wherein the means N are provided with means for gradually increasing the speed with which the duty cycle of the switching element decreases at the end of each square wave.

3. A circuit arrangement as claimed in Claim 1 or 2, characterized in that the circuit arrangement is also provided with means for limiting the amplitude of a re-ignition voltage at the beginning of each square wave.

4. A circuit arrangement as claimed in Claim 3, comprising a converter provided with a switching element for generating a DC voltage from the supply voltage, from which DC voltage the high-frequency current is generated during lamp operation, wherein the means for limiting the amplitude of the re-ignition voltage at the beginning of each square wave are provided with means for limiting the duty cycle of the switching element at the beginning of each square wave.

5. A circuit arrangement as claimed in any one or several of the preceding Claims, characterized in that the circuit arrangement is also provided with means for limiting the speed with which the amplitude of a voltage across the lamp decreases at the end of each square wave.

6. A circuit arrangement as claimed in Claim 5, comprising a converter provided with a switching element for generating a DC voltage from the supply voltage, from which DC voltage the high-frequency current is generated during lamp operation, wherein the means for limiting the speed with which the amplitude of the voltage across the lamp decreases at the end of each square wave are provided with means for limiting the speed with which the duty cycle of the switching element of the converter decreases at the end of each square wave.

## Patentansprüche

1. Schaltungsanordnung zum Betreiben einer Entladungslampe (La) mit Hilfe eines Hf-Stromes, mit
- Schaltmitteln zum Erzeugen des Hf-Stromes aus einer Speisespannung,
- einem Modulator (II) für die im wesentlichen rechteckige Modulation der Amplitude des Hf-Stromes mit einer Modulationsfrequenz f, und
- einem Mittel M zum Begrenzen der Störungen in Infrarotsystemen infolge der Entladungslampe (La)
dadurch gekennzeichnet, daß das Mittel M ein Mittel N zum Versorgen einer allmählichen Geschwindigkeitserhöhung enthält, mit der die Amplitude des Hf-Stromes am Ende einer Rechteckwelle der Recheckwellenmodulation abfällt.

2. Schaltungsanordnung nach Anspruch 1, mit einem Wandler, der ein Schaltelement zum Erzeugen einer Gleichspannung aus der Speisespannung enthält, wobei aus der Gleichspannung der Hf-Strom im Lampenbetrieb erzeugt wird, wobei das Mittel N mit Mitteln zum allmählichen Erhöhen der Geschwindigkeit versehen ist, mit der das Tastverhältnis des Schaltelements am Ende jeder Rechteckwelle abfällt.

3. Schaltungsanordnung nach Anspruch 1 oder 2, dadurch gekennzeichnet, daß die Schaltungsanordnung ebenfalls mit Mitteln zum Begrenzen der Amplitude einer Neuzündspannung am Anfang jeder Rechteckwelle versehen ist.

4. Schaltungsanordnung nach Anspruch 3, mit einem Wandler, der ein Schaltelement zum Erzeugen einer Gleichspannung aus der Speisespannung enthält, und aus dieser Gleichspannung der Hf-Strom im Lampenbetrieb erzeugt wird, wobei das Mittel zum Begrenzen der Amplitude der Neuzündspannung am Anfang jeder Rechteckwelle mit Mitteln zum Begrenzen des Tastverhältnisses des Schaltelements am Anfang jeder Rechteckwelle vorgesehen sind.

5. Schaltungsanordnung nach einem oder mehreren der vorangehenden Ansprüche, dadurch gekennzeichnet, daß die Schaltungsanordnung ebenfalls mit Mitteln zum Begrenzen der Geschwindigkeit versehen ist, mit der die Amplitude einer Spannung an der Lampe am Ende jeder Rechteckwelle abfällt.

6. Schaltungsanordnung nach Anspruch 5 mit einem Wandler, der mit einem Schaltelement zum Erzeugen einer Gleichspannung aus der Speisespannung enthält, und aus dieser Gleichspannung der Hf-Strom im Lampenbetrieb erzeugt wird, wobei die Mittel zum Begrenzen der Geschwindigkeit, mit der die Amplitude der Spannung an der Lampe am Ende jeder Rechteckwelle abfällt, mit Mitteln zum Begrenzen der Geschwindigkeit versehen sind, mit der das Tastverhältnis des Schaltelements des Wandlers am Ende jeder Rechteckwelle abfällt.

## Revendications

1. Dispositif de commutation pour le fonctionnement d'une lampe à décharge (La) à l'aide d'un courant haute fréquence, comportant
- des moyens de commutation permettant d'engendrer le courant haute fréquence à partir d'une tension d'alimentation,
- un modulateur (II) pour la modulation pratiquement rectangulaire de l'amplitude du courant haute fréquence à une fréquence de modulation f, et
- des moyens M permettant de limiter la perturbation de systèmes infrarouge provoquée par la lampe à décharge (La),
caractérisé en ce que les moyens M comportent des moyens N permettant d'augmenter graduellement la vitesse à laquelle diminue l'amplitude du courant haute fréquence à la fin d'un rectangle de la modulation rectangulaire.

2. Dispositif de commutation selon la revendication 1, comportant un convertisseur, muni d'un élément de commutation, permettant d'engendrer, à partir de la tension d'alimentation, une tension continue à partir de laquelle est engendré le courant haute fréquence, lors du fonctionnement de la lampe, dispositif dans lequel les moyens N sont munis de moyens permettant d'augmenter graduellement la vitesse à laquelle diminue le coefficient d'utilisation de l'élément de commutation à la fin de chaque rectangle.

3. Dispositif de commutation selon la revendication 1 ou 2, caractérisé en ce que le dispositif de commutation est également muni de moyens permettant de limiter l'amplitude d'une tension de réamorçage au début de chaque rectangle.

4. Dispositif de commutation selon la revendication 3, comportant un convertisseur muni d'un élément de commutation permettant d'engendrer, à partir de la tension d'alimentation, une tension continue à partir de laquelle est engendré le courant haute fréquence, lors du fonctionnement de la lampe, dispositif dans lequel les moyens permettant de limiter l'amplitude de la tension de réamorçage au début de chaque rectangle sont munis de moyens permettant de limiter le coefficient d'utilisation de l'élément de commutation au début de chaque rectangle.

5. Dispositif de commutation selon l'une ou plusieurs des revendications précédentes, caractérisé en ce que le dispositif de commutation est également muni de moyens permettant de limiter la vitesse à laquelle diminue l'amplitude d'une tension aux bornes de la lampe à la fin de chaque rectangle.

6. Dispositif de commutation selon la revendication 5, comportant un convertisseur, muni d'un élément de commutation permettant d'engendrer, à partir de la tension d'alimentation, une tension continue à partir de laquelle est engendré le courant haute fréquence, lors du fonctionnement de la lampe, dispositif dans lequel les moyens permettant de limiter la vitesse à laquelle diminue l'amplitude de la tension aux bornes de la lampe à la fin de chaque rectangle sont munis de moyens permettant de limiter la vitesse à laquelle diminue le coefficient d'utilisation de l'élément de commutation du convertisseur à la fin de chaque rectangle.
